(19) Europäisches Patentamt
European Patent Office
Office européen des brevets

(11) EP 1 634 895 B1

(12) **EUROPEAN PATENT SPECIFICATION**

(45) Date of publication and mention of the grant of the patent:
**05.11.2008 Bulletin 2008/45**

(51) Int Cl.:
*C08F 14/18* (2006.01) *C08K 5/14* (2006.01)

(21) Application number: **04104347.2**

(22) Date of filing: **09.09.2004**

(54) **Fluoropolymer for making a fluoroelastomer**

Fluoropolymer zur Herstellung von einem Fluoroelastomer

Fluoropolymère pour la fabrication d'un fluoroelastomère

(84) Designated Contracting States:
**AT BE BG CH CY CZ DE DK EE ES FI FR GB GR HU IE IT LI LU MC NL PL PT RO SE SI SK TR**

(43) Date of publication of application:
**15.03.2006 Bulletin 2006/11**

(73) Proprietor: **3M Innovative Properties Company**
**St. Paul MN 55144-1000 (US)**

(72) Inventors:
- **Kaspar Harald,**
  **c/o 3M Europe S.A.**
  **1831, Diegem (BE)**
- **Hintzer, Klaus,**
  **c/o 3M Europe S.A.**
  **1831, Diegem (BE)**

(74) Representative: **Kurz, Arnd et al**
**3M ESPE AG**
**3M Office of Intellectual Property Counsel**
**ESPE Platz**
**82229 Seefeld (DE)**

(56) References cited:
**EP-A- 0 171 290**
**EP-A- 0 208 314**
**EP-A- 0 211 251**
**EP-A- 0 424 555**
**EP-A- 0 425 259**
**US-A- 4 948 853**
**US-A- 4 983 697**
**US-A- 5 447 993**
**US-A1- 2001 023 280**
**US-A1- 2002 028 886**
**US-A1- 2002 040 119**
**US-A1- 2003 208 004**
**US-A1- 2004 014 900**
**US-A1- 2004 092 684**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

1. Field of the invention

This invention relates to amorphous fluoropolymers, i.e. amorphous polymers having a fluorinated backbone. The amorphous fluoropolymers are curable and can be cured to obtain a fluoroelastomer. In particular, the present invention relates to such fluoropolymers having improved processing characteristics, e.g. in their extrusion into articles such as tubes and in injection molding articles.

2. Background of the invention

Fluoropolymers have been long known and have been used in a variety of applications because of several desirable properties such as heat resistance, chemical resistance, weatherability, UV-stability etc... The various applications of fluoropolymers are for example described in "Modern Fluoropolymers", edited by John Scheirs, Wiley Science 1997. Fluoropolymers include homo and co-polymers of a gaseous fluorinated olefin such as tetrafluoroethylene (TFE), chlorotrifluoroethylene (CTFE) and/or vinylidene fluoride (VDF) with one or more comonomers such as for example hexafluoropropylene (HFP) or perfluorovinyl ethers (PVE) or non-fluorinated olefins such as ethylene (E) and propylene (P). The term "copolymer" in connection with the present invention should generally be understood to mean a polymer comprising repeating units derived from the recited monomers without excluding the option of other further repeating units being present that derive from other monomers not explicitly recited. Accordingly, for example the term 'copolymer of monomers A and B' includes binary polymers of A and B as well as polymers that have further monomers other than A and B such as for example terpolymers.

Fluoropolymers include melt-processible and non-melt-processible polymers. For example, polytetrafluoroethylene and copolymers of tetrafluoroethylene with small amounts (e.g. not more than 0.5% by weight) of a comonomer are generally not melt-processible with conventional equipment used for the processing of thermoplastic polymers because of their high molecular weight and their high melt viscosity. Accordingly, for these non-melt-processible fluoropolymers, special processing techniques have been developed to allow forming these fluoropolymers into desired articles and shapes.

Melt-processible thermoplastic fluoropolymers are also known and these can be obtained from various combinations of fluorinated and/or non-fluorinated monomers. As they are melt-processible, they can be processed with equipment typically used for the processing, of thermoplastic polymers, such as e.g. molding or extrusion. Melt-processible thermoplastic fluoropolymers include generally amorphous fluoropolymers and fluoropolymers that have substantial crystallinity. Fluoropolymers that are generally amorphous are typically used to make fluoroelastomers by curing or vulcanizing the fluoropolymer. Although, the elastomeric properties generally are obtained after curing, the fluoropolymers used for making the fluoroelastomer are often also called fluoroelastomer. Melt-processible thermoplastic fluoropolymers that have substantial crystallinity and that accordingly have a clearly detectable and prominent melting point are known in the art as fluorothermoplasts. They typically have a melting point between 100°C and 320°C depending on their monomer composition.

The present invention is concerned with amorphous fluoropolymers that can be cured to obtain a fluoroelastomer. In accordance with the present invention, a fluoropolymer is considered amorphous if it does not have a melting point or if it only has a marginal melting point such that upon curing the fluoropolymer is substantially elastomeric.

The amorphous fluoropolymer may be cured by providing cure-sites in the amorphous fluoropolymer which can then react with one or more components of the cure composition to provide a three dimensional cross-linking network. Typically, the cure-sites comprise a halogen such as bromine or iodine that is capable of participating in a peroxide cure reaction or the cure-sites may comprise a nitrile group that can also be cured with a peroxide or other cure components. Alternatively, the amorphous fluoropolymer can be dehydrofluorinated to form cure sites that can then be involved in a cure reaction. Such amorphous fluoropolymers are partially fluorinated, i.e. they contain carbon-hydrogen bonds in the backbone, and are known in the art as bisphenol curable fluoropolymers.

Peroxide curable amorphous fluoropolymers have been disclosed in a variety of publications. For example EP 398241 discloses a fluoropolymer that can be obtained by continuous emulsion polymerization in the presence of a iodinated compound. The fluoropolymer so produced contains at least 0.1% by weight of iodine. The fluoropolymer further comprises repeating units having bromine such that the amount of bromine in the polymer is between 0.1 and 1 % by weight.

EP 171290 discloses a peroxide curable fluoropolymer that comprises repeating units of a iodine containing monomer. The repeating units are contained in the polymer in an amount of 0.1 to 2 mole%. It is taught that such fluoropolymers cure faster and have a better compression set compared to analogues fluoropolymers having bromine containing repeating units. It is also taught that the fluoropolymers have a lower viscosity than the bromine containing analogues, which would present a processing advantage.

Bromine containing peroxide curable fluoropolymers are taught in US 4214060 and EP 211251. The latter patent teaches a fluoropolymer that comprises repeating units derived from a brominated perfluorovinyl monomer of the formula $CF_2Br-(R_f)_n-O-CF=CF_2$, wherein $R_f$ is fluorinated alkylene and n is 0 or 1. The polymer is produced in the presence of a chain transfer agent of the formula $R-(CF_2Br)_m$ where m is 1 or 2. It is taught that by using such chain transfer agent, the possibility of branching of the fluoropolymer chain can be kept to a minimum as compared to other bromine containing chain transfer agents.

The amorphous fluoropolymers are typically used in making a variety of elastomeric articles including for example tubes, gaskets, O-rings etc... In producing the elastomeric article, a curable elastomer composition comprising the amorphous fluoropolymer and a cure composition may be extruded or injection molded. A desire still exists to improve the processing behaviour of the amorphous fluoropolymer in extrusion and in particular in injection molding. For example, problems may arise in filling of the mold in injection molding, particular at high rates.

Summary of the invention

It would thus be desirable to improve the processing characteristics of amorphous fluoropolymers in particular in extrusion and injection molding. It would in particular be desirable to improve the critical shear strength and melt tension to improve the processing in tube extrusion. It would further be desired that such improvement of the processing properties does not adversely affect the curing of the fluoropolymer to obtain a fluoroelastomer and the resulting mechanical and physical properties of the fluoroelastomer obtained. It is generally also desirable that the fluoropolymers can be produced in an easy and convenient way and in an environmentally friendly way.

In accordance with one aspect of the invention, there is provided (i) an amorphous fluoropolymer that has one or more cure site components, the cure site components being contained in the amorphous fluoropolymer in an amount between 0.1 and 0.5 mol% based on the total amount of repeating units and (ii) the amorphous fluoropolymer is capable of being dehydrofluorinated, wherein the amorphous fluoropolymer is derivable from a polymerization of (a) one or more gaseous fluorinated monomers and (b) not more than 0.5% by weight based on the total weight of monomers of one or more olefins having a bromine or iodine atom bonded to a carbon of the double bond of the olefin.

It has been found that the amorphous fluoropolymers according to the invention have improved processing characteristics, in particular in injection molding and extrusion. For example, the fluoropolymers have an improved critical shear rate, i.e. the rate at which melt fracture occurs in the extrusion of the fluoropolymer. Furthermore, it has been found that the amorphous fluoropolymers have good cure characteristics and the resulting elastomers have good mechanical and physical properties.

In a further aspect of the present invention a method of producing the fluoropolymer is provided. The method comprises a polymerization of (a) one or more gaseous fluorinated monomers and (b) not more than 0.5% by weight based on the total weight of monomers of one or more olefins having a bromine or iodine atom bonded to a carbon of the double bond of the olefin and providing capability for the fluoropolymer to be cured by (i) polymerizing the one or more gaseous fluorinated monomers in the presence of one or more components comprising a cure site, the total amount of said components being sufficient for introducing between 0.1 and 0.5 mole% based on the total amount of repeating units of cure site components in the amorphous fluoropolymer and (ii) selecting at least one partially fluorinated gaseous monomer as said one or more gaseous fluorinated monomers or copolymerizing said gaseous fluorinated monomers with one or more non-fluorinated comonomers or partially fluorinated non-gaseous monomers so as to provide an amorphous fluoropolymer capable of being dehydrofluorinated.

In a still further aspect, the invention provides a curable composition for making a fluoroelastomer. The composition comprises an amorphous fluoropolymer as defined above and a cure composition comprising one or more components for curing the amorphous fluoropolymer. The invention also provides a method of making an elastomer article comprising injection molding or extruding the curable composition and curing said curable composition.

4. Detailed description of the invention

According to the present invention, the amorphous fluoropolymer is derivable from a polymerization of (a) one or more gaseous fluorinated monomers and (b) not more than 0.5% by weight based on the total weight of monomers of one or more olefins having a bromine or iodine atom bonded to a carbon of the double bond of the olefin. The olefin may apart from containing Br and/or I atoms, be non-fluorinated, i.e. not contain fluorine atoms, may be partially fluorinated, i.e. some but not all hydrogen atoms have been replaced with fluorine atoms, or the olefin may be a perfluorinated compound in which all hydrogen atoms have been replaced with fluorine atoms except for those replaced with I or Br.

In a particular embodiment, the olefin corresponds to the general formula:

$$X_2C=CXZ \qquad (I)$$

wherein each X may be the same or different and is selected from the group consisting of hydrogen, F, Cl, Br and I, with the proviso that at least one X represents Br or I, Z represents hydrogen, F, Cl, Br, I, a perfluoroalkyl group, a perfluoroalkoxy group or a perfluoropolyether group. Examples of perfluoroalkyl groups include linear or branched perfluoroalkyl groups having between 1 and 8 carbon atoms, for example 1 to 5 carbon atoms. Examples of perfluoroalkoxy groups include those that have between 1 and 8 carbon atoms, for example between 1 and 5 carbon atoms in the alkyl group and whereby the alkyl group may be linear or branched. Examples of perfluoropolyether groups include those corresponding to the formula:

$$-O(R^1_fO)_n\,(R^2_fO)_mR^3_f$$

wherein $R^1_f$ and $R^2_f$ are each linear or branched perfluoroalkylene groups of 1-6 carbon atoms, in particular 2 to 6 carbon atoms, m and n are independently 0-10 with m+n being at least 1 and $R^3_f$ is a perfluoroalkyl group of 1-6 carbon atoms.

In a particular embodiment, olefins of formula (I) can be employed wherein X is selected from hydrogen, F and Br with the proviso that at least one X represents Br and Z is hydrogen, F, Br, a perfluoroalkyl group or a perfluoroalkoxy group. Specific examples of olefins that may conveniently be used include 1-bromo-1,2,2,-trifluoroethylene, bromotrifluoroethylene (referred as BTFE), vinylbromide, 1,1-dibromoethylene, 1,2-dibromoethylene and 1-bromo-2,3,3,3-tetrafluoro-propene. Generally preferred is 1-bromo-2,2-difluoroethylene (BDFE).

The use of the aforementioned olefin in preparation of the amorphous fluoropolymers causes the polymer to become non-linear polymers i.e. branched polymers. The level of branching or non-linearity can be characterized through the long chain branching index (LCBI). The LCBI can be determined as described in R. N. Shroff, H. Mavridis; Macromol., 32, 8464-8464 (1999) & 34, 7362-7367 (2001) according to the equation:

$$LCBI = \frac{\eta_{0,br.}^{1/a}}{[\eta]_{br.}} \cdot \frac{1}{k^{1/a}} - 1 \qquad \text{cq. 1}$$

In the above equation, $\eta_{0,br}$ is the zero shear viscosity (units Pa·s) of the branched fluoropolymer measured at a temperature T and $[\eta]_{br}$ is the intrinsic viscosity (units ml/g) of the branched fluoropolymer at a temperature T in a solvent in which the branched fluoropolymer can be dissolved and a and k are constants. These constants are determined from the following equation:

$$\eta_{0,lin} = k \cdot [\eta]_{lin.}^{a} \qquad \text{cq. 2}$$

wherein $\eta_{0,lin}$ and $[\eta]_{lin}$ represent respectively the zero shear viscosity and intrinsic viscosity of the corresponding linear fluoropolymer measured at the respective same temperatures T and T' and in the same solvent. Thus, the LCBI is independent of the selection of the measurement temperatures and solvent chosen provided of course that the same solvent and temperatures are used in equations 1 and 2. The zero shear viscosity and intrinsic viscosity are typically determined on freeze coagulated fluoropolymers.

The values a and k along with the test conditions for some of the fluoropolymers that may be used in the melt-processible polymer composition are set forth in the following table:

| Polymer | test condition | a-value | k-value |
|---|---|---|---|
| $TFE_{39}/HFP_{11}/VDF_{50}$ | A | 5.8 | $2.4\ 10^{-8}$ |
| $TFE_{24\cdot5}/HFP_{23}/VDF_{52.5}$ | A | 5.8 | $5.5\ 10^{-8}$ |
| $VDF_{78}/HFP_{22}$ | A | 5.8 | $1.5\ 10^{-8}$ |
| polyvinylidene fluoride | B | 5.8 | $1.2\ 10^{-8}$ |
| polyvinylidene fluoride | C | 5.8 | $2.2\ 10^{-8}$ |

In the above table, the indexes to the monomer units in the polymer indicate the amount of the respective unit in mole% and the test conditions are as follows:

A: shear viscosity at 265°C and the intrinsic viscosity in methyl ethyl ketone at 35°C

B: shear viscosity at 230°C and the intrinsic viscosity in dimethylformamide at 23°C
C: shear viscosity at 230°C and the intrinsic viscosity in dimethylformamide at 110°C.

It can be observed from the above table that the constant a appears to be independent of the fluoropolymer tested whereas the k-value varies with composition of the fluoropolymer and test condition used.

The LCBI of the amorphous fluoropolymer can be influenced by the nature and amount of olefin used. Generally it will be desired to obtain amorphous fluoropolymers that have an LCBI of at least 0.1. For example, in one embodiment, the LCBI is at least 0.5, in another embodiment the LCBI may be at least 1 and in a still further embodiment, the LCBI is at least 1.5. It has generally been observed that for a given molecular weight of the fluoropolymer, the critical shear rate improves with an increase in the LCBI. However, the LCBI should not be too high as this may cause the fluoropolymer to have substantial amount of gel fractions which may again impair the processing and/or ultimate properties of the fluoroelastomer. Typically, the LCBI should be between 0.1 and 3. To generally achieve the desired LCBI, the olefin having a bromine or iodine atom on the double bond should be used in amounts of not more than 0.5% by weight based on the total weight of the monomers used to produce the fluoropolymer. Typical amounts of the olefin are between 0.01% by weight and 0.4% by weight. In a particular embodiment, the amount is between 0.05 and 0.35% by weight.

The fluoropolymers can be obtained with any of the known polymerization techniques including solution polymerization and suspension polymerization. The fluoropolymers are generally made through an aqueous emulsion polymerization process, which can be conducted in a known manner. The reactor vessel for use in the aqueous emulsion polymerization process is typically a pressurizable vessel capable of withstanding the internal pressures during the polymerization reaction. Typically, the reaction vessel will include a mechanical agitator, which will produce thorough mixing of the reactor contents and heat exchange system. Any quantity of the fluoromonomer(s) may be charged to the reactor vessel. The monomers may be charged batchwise or in a continuous or semicontinuous manner. By semicontinuous is meant that a plurality of batches of the monomer are charged to the vessel during the course of the polymerization. The independent rate at which the monomers are added to the kettle will depend on the consumption rate of the particular monomer with time. Preferably, the rate of addition of monomer will equal the rate of consumption of monomer, i.e. conversion of monomer into polymer.

The reaction kettle is charged with water, the amounts of which are not critical. To the aqueous phase there is generally also added the fluorinated surfactant, typically a non-telogenic fluorinated surfactant. The polymerization may also be carried out without addition of a fluorinate surfactant. The fluorinated surfactant when used, is typically used in amount of 0.01 % by weight to 1% by weight. Suitable fluorinated surfactants include any fluorinated surfactant commonly employed in aqueous emulsion polymerization. Particularly preferred fluorinated surfactants are those that correspond to the general formula:

$$Y\text{-}R_f\text{-}Z\text{-}M$$

wherein Y represents hydrogen, Cl or F; $R_f$ represents a linear or branched perfluorinated alkylene having 4 to 10 carbon atoms; Z represents $COO^-$ or $SO_3^-$ and M represents an alkali metal ion or an ammonium ion. Most preferred fluorinated surfactants for use in this invention are the ammonium salts of perfluorooctanoic acid and perfluorooctane sulphonic acid. Mixtures of fluorinated surfactants can be used.

A chain transfer agent can be used in the polymerization to control the molecular weight of the fluoropolymer. The chain transfer agent is typically charged to the reaction kettle prior to the initiation of the polymerization. Useful chain transfer agents include $C_2$-$C_6$ hydrocarbons such as ethane, alcohols, ethers, esters including aliphatic carboxylic acid esters and malonic esters, ketones and halocarbons. Particularly useful chain transfer agents are dialkylethers such as dimethyl ether and methyl tertiary butyl ether. Further additions of chain transfer agent in a continuous or semicontinuous way during the polymerization may also be carried out. For example, a fluoropolymer having a bimodal molecular weight distribution is conveniently prepared by first polymerizing fluorinated monomer in the presence of an initial amount of chain transfer agent and then adding at a later point in the polymerization further chain transfer agent together with additional monomer.

The polymerization is usually initiated after an initial charge of monomer by adding an initiator or initiator system to the aqueous phase. For example peroxides can be used as free radical initiators. Specific examples of peroxide initiators include, hydrogen peroxide, diacylperoxides such as diacetylperoxide, dipropionylperoxide, dibutyrylperoxide, dibenzoylperoxide, benzoylacetylperoxide, diglutaric acid peroxide and dilaurylperoxide, and further water soluble peracids and water soluble salts thereof such as e.g. ammonium, sodium or potassium salts. Examples of per-acids include peracetic acid. Esters of the peracid can be used as well and examples thereof include tert.-butylperoxyacetate and tert.-butylperoxypivalate. A further class of initiators that can be used are water soluble azo-compounds. Suitable redox systems for use as initiators include for example a combination of peroxodisulphate and hydrogen sulphite or disulphite, a combination of thiosulphate and peroxodisulphate or a combination of peroxodisulphate and hydrazine. Further initiators that can be used are ammonium- alkali- or earth alkali salts of persulfates, permanganic or manganic acid or manganic

acids. The amount of initiator employed is typically between 0.03 and 2 % by weight, preferably between 0.05 and 1 % by weight based on the total weight of the polymerization mixture. The full amount of initiator may be added at the start of the polymerization or the initiator can be added to the polymerization in a continuous way during the polymerization until a conversion of 70 to 80%. One can also add part of the initiator at the start and the remainder in one or separate additional portions during the polymerization. Accelerators such as for example water-soluble salts of iron, copper and silver may preferably also be added.

During the initiation of the polymerization reaction, the sealed reactor kettle and its contents are conveniently pre-heated to the reaction temperature. Polymerization temperatures are from 20°C to 150°C, preferred from 30°C to 110°C and most preferred from 40°C to 100°C. The polymerization pressure is typically between 4 and 30 bar, in particular 8 to 20 bar. The aqueous emulsion polymerization system may further comprise auxiliaries, such as buffers and complex-formers.

The amount of polymer solids that can be obtained at the end of the polymerization is typically between 10% and 45% by weight, preferably between 20% and 40% by weight and the average particle size of the resulting fluoropolymer is typically between 50 nm and 500 nm.

The (aqueous emulsion) polymerization process comprises the polymerization of one or more gaseous fluorinated monomer which may be perfluorinated or not. Examples of a gaseous fluorinated monomer include tetrafluoroethylene (TFE), chlorotrifluoroethylene, vinylidene fluoride (VDF), perfluoroalkyl vinyl monomers such as hexafluoropropylene (HFP), fluorinated allyl ethers, in particular perfluorinated allyl ethers and fluorinated vinyl ethers, in particular perfluorovinyl ethers such as perfluoromethyl vinyl ether. The use of a partially fluorinated gaseous monomer can provide a fluoropolymer that is capable of dehydrofluorinated. For example VDF is particularly suitable to provide a fluoropolymer capable of dehydrofluorination. Comonomers that can be used for copolymerization with the gaseous fluorinated monomers include non-gaseous fluorinated monomers, i.e. fluorinated monomers that under the conditions of polymerization are in a liquid phase and non-fluorinated monomers such as ethylene and propylene. If a fluoropolymer capable of dehydrofluorination is desired and perfluorinated gaseous monomers are being used, then the comonomer should be partially fluorinated or non-fluorinated to provide for the dehydrofluorination capability of the fluoropolymer.

Examples of perfluorovinyl ethers that can be used in the process of the invention include those that correspond to the formula:

$$CF_2{=}F{-}O{-}R_f$$

wherein $R_f$ represents a perfluorinated aliphatic group that may contain one or more oxygen atoms. Particularly preferred perfluorinated vinyl ethers correspond to the formula:

$$CF_2{=}CFO(R^a_fO)_n\ (R^b_fO)_mR^c_f$$

wherein $R^a_f$ and $R^b_f$ are different linear or branched perfluoroalkylene groups of 1-6 carbon atoms, in particular 2 to 6 carbon atoms, m and n are independently 0-10 and $R^c_f$ is a perfluoroalkyl group of 1-6 carbon atoms. Specific examples of perfluorinated vinyl ethers include perfluoro methyl vinyl ether (PMVE), perfluoro n-propyl vinyl ether (PPVE-1), perfluoro-2-propoxypropylvinyl ether (PPVE-2), perfluoro-3-methoxy-n-propylvinyl ether, perfluoro-2-methoxy-ethylvinyl ether and $CF_3$-$(CF_2)_2$-O-$CF(CF_3)$-$CF_2$-O-$CF(CF_3)$-$CF_2$-O-$CF{=}CF_2$. Some of the aforementioned perfluorovinyl ethers will be liquid under the conditions of polymerization and are thus non-gaseous fluorinated monomers. Suitable perfluoroalkyl vinyl monomers correspond to the general formula:

$$CF_2{=}CF{-}R^d_f \text{ or } CH_2{=}CH{-}R^d_f$$

wherein $R^d_f$ represents a perfluoroalkyl group of 1 to 10, preferably 1 to 5 carbon atoms. A typical example of a perfluoroalkyl vinyl monomer is hexafluoropropylene.

The olefin used in the invention to introduce branching may be added to the polymerization vessel in portions or in a continuous way. The olefin may be fed to the polymerization from a separate inlet or storage cylinder. Alternatively, a mixture of the olefin with a fluorinated monomer may be used to feed the olefin to the polymerization. The latter method may provide improved homogeneous incorporation of the olefin into the polymer leading to a more uniform distribution of long chain branches. Suitable fluorinated monomers with which the olefin can be admixed to feed to the polymerization include fluorinated olefins such as CTFE, HFP and perfluorovinyl ethers such as perfluoromethyl vinyl ether.

The amorphous fluoropolymer of the invention includes a cure site component. The cure site component is generally present in an amount of 0.1 to 0.5 mole%. According to a particular embodiment, the amount of cure site component is between 0.15 and 0.4 mole % or between 0.2 and 0.3 mole % based on the total amount of repeating units in the fluoropolymer. To introduce a cure site component into the amorphous fluoropolymer, a monomer comprising the particular cure-site may be used or the polymerization may be conducted by using a chain transfer agent or initiator

that is capable of introducing the cure site at the terminal ends of the polymer chain.

For example, in order to introduce halogens, which are capable of participation in the peroxide cure reaction, along the chain, the copolymerization of the basic monomers of the fluoropolymer may be carried out with a suitable fluorinated cure-site monomer. The cure-site monomer is typically an ethylenically unsaturated monomer that does not have Br or I atoms on the double bond. Examples of comonomers include those that correspond to the formula:

$$CX_2=CX-R_f-Z$$

wherein each X independently represents H, F or Cl, $R_f$ represents a perfluorinated aliphatic group that may contain one or more oxygen atoms and Z represents Br or I.

Further examples of comonomers can be selected for instance from:

(a) bromo- or iodo- (per)fluoroalkyl-perfluorovinylethers having the formula:

$$Z-R_f-O-CF=CF_2$$

wherein Z is Br or I, $R_f$ is a (per)fluoroalkylene $C_1$-$C_{12}$, optionally containing chlorine and/or ether oxygen atoms; for example: $BrCF_2$-O-CF=$CF_2$, $BrCF_2CF_2$-O-CF=$CF_2$, $B_rCF_2CF_2CF_2$-O-CF=$CF_2$, $CF_3CFBrCF_2$-O-CF=$CF_2$ ;

(b) bromo- or iodo (per)fluoroolefins such as those having the formula:

$$Z'-R'_fCF=CF_2$$

wherein Z' is Br or I, $R'_f$ is a (per)fluoroalkylene $C_1$-$C_{12}$, optionally containing chlorine atoms; for instance: 4-bromo-perfluorobutene-1, or 4-bromo-3,3,4,4-tetrafluorobutene-1;

(c) non-fluorinated bromo- olefins such as 4-bromo-1-butene.

In replacement of or in addition to the cure site comonomer, the fluoropolymer can contain a cure site component in terminal position, deriving from a suitable chain transfer agent introduced in the reaction medium during the polymer preparation, as described in U.S. Pat. No. 4,501,869 or derived from a suitable initiator. Examples of useful initiators include $X(CF_2)_nSO_2Na$ with n=1 to 10 (where X is Br or I) or an initiator composition comprising ammonium persulfate and potassium bromide.

Examples of chain transfer agents include those having the formula $R_fBr_x$, wherein $R_f$ is a x-valent (per)fluoroalkyl radical $C_1$-$C_{12}$, optionally containing chlorine atoms, while x is I or 2. Examples include $CF_2Br_2$, $Br(CF_2)_2Br$, $Br(CF_2)_4Br$, $CF_2ClBr$, $CF_3CFBrCF_2Br$. Further examples of suitable chain transfer agents are disclosed in US 4,000,356.

Alternatively, or additionally, the fluoropolymer may comprise cure site components that have a nitrile group. To introduce such nitrile containing cure site components, a nitrile group containing cure site monomer may be used in the polymerization process. In one embodiment useful nitrile group-containing cure site monomers include nitrile-containing fluorinated olefins and nitrile-containing fluorinated vinyl ethers, such as depicted below:

$$CF_2=CF-CF_2-O-R_f-CN$$

$$CF_2=CFO(CF_2)_LCN$$

$$CF_2=CFO[CF_2CF(CF_3)O]_g(CF_2O)_vCF(CF_3)CN$$

$$CF_2=CF[OCF_2CF(CF_3)]_kO(CF_2)_uCN$$

where, in reference to the above formulas: L=2-12; g=0-4; k=1 -2; v=0-6; and u=1-4, $R_f$ is a perfluoroalkylene or a bivalent perfluoroether group. Representative examples of such a monomer include perfluoro(8-cyano-5-methyl-3,6-dioxa-1-octene), $CF_2=CFO(CF_2)_5CN$, and $CF_2=FO(CF_2)_3OCF(CF_3)CN$.

Nitrile groups may also be introduced in the fluoropolymer at the terminal ends by initiating the polymerization in the presence of a nitrile group containing salt or pseudohalogen. Suitable nitrile group containing salts include those that have the nitrile group in the anion of the salt and in particular correspond to the formula:

$$M-(X_a-CN)_n$$

wherein M represents a mono- or multi-valent cation including a metal cation or an ammonium, X is O, S, Se or N, *a* has a value of 0 or 1 and n corresponds to the valence of the cation. Suitable cations M include organic (e.g. tetraalkylammonium cations) and inorganic cations. Particularly useful cations are ammonium and metal cations including monovalent cations such as sodium and potassium as well as divalent cations such as calcium and magnesium. Examples of potassium salts include potassium cyanide, potassium cyanate and potassium thiocyanate. The salts wherein X is O or S and the cyanides are generally preferred.

Examples of fluoropolymers that may be produced with the process according to the invention include a copolymer of tetrafluoroethylene and hexafluoropropylene, a copolymer of tetrafluoroethylene and perfluorovinyl ether (e.g. PMVE, PPVE-1, PPVE-2 or a combination of PPVE-1 and PPVE-2), a copolymer of vinylidene fluoride and hexafluoropropylene, a copolymer of tetrafluoroethylene and vinylidene fluoride, a copolymer of chlorotrifluoroethylene and vinylidene fluoride, a copolymer of tetrafluoroethylene and ethylene, a copolymer of tetrafluoroethylene and propylene, a copolymer of vinylidene fluoride and perfluorovinyl ether (e.g. PMVE, PPVE-1, PPVE-2 or a combination of PPVE-1 and PPVE-2), a terpolymer of tetrafluoroethylene, hexafluoropropylene and perfluorovinyl ether (e.g. PMVE, PPVE-1, PPVE-2 or a combination of PPVE-1 and PPVE-2), a terpolymer of tetrafluoroethylene, ethylene or propylene and perfluorovinyl ether (e.g. PMVE, PPVE-1, PPVE-2 or a combination of PPVE-1 and PPVE-2), a terpolymer of tetrafluoroethylene, ethylene or propylene and hexafluoropropylene, a terpolymer of tetrafluoroethylene, vinylidene fluoride and hexafluoropropylene, a terpolymer of vinylidene fluoride, tetrafluoroethylene and perfluorovinyl ether (e.g. PMVE, PPVE-1, PPVE-2 or a combination of PPVE-1 and PPVE-2), and a copolymer of a copolymer of tetrafluoroethylene, ethylene or propylene, hexafluoropropylene and perfluorovinyl ether (e.g. PMVE, PPVE-1, PPVE-2 or a combination of PPVE-1 and PPVE-2). Any of the aforementioned copolymers may additionally contain a cure site component deriving from a cure-site comonomer and/or from an initiation system or chain transfer agent as described above.

A curable fluoroelastomer composition in accordance with the present invention comprises the amorphous fluoropolymer and a cure composition for curing the amorphous fluoropolymer. The cure composition will of course depend on whether or not the amorphous fluoropolymer can be dehydrofluorinated and whether or not the fluoropolymer includes cure site components as well as the nature thereof.

In case the fluoropolymer includes a cure site component such as a halogen or a nitrile, the cure composition may comprise one or more peroxides. Suitable organic peroxides are those which generate free radicals at curing temperatures. A dialkyl peroxide or a bis(dialkyl peroxide) which decomposes at a temperature above 50° C is especially preferred. In many cases it is preferred to use a di-tertiarybutyl peroxide having a tertiary carbon atom attached to peroxy oxygen. Among the most useful peroxides of this type are 2,5-dimethyl-2,5-di(tertiarybutylperoxy)hexyne-3 and 2,5-dimethyl-2,5- di(tertiarybutylperoxy)hexane. Other peroxides can be selected from such compounds as dicumyl peroxide, dibenzoyl peroxide, tertiarybutyl perbenzoate, α,α'-bis(t-butylperoxy-diisopropylbenzene), and di[1,3-dimethyl-3-(t-butylperoxy)-butyl]carbonate. Generally, about 1-3 parts of peroxide per 100 parts of fluoropolymer is used.

Another component which is usually included in a cure composition based on an organic peroxide, is a coagent composed of a polyunsaturated compound which is capable of cooperating with the peroxide to provide a useful cure. These coagents can be added in an amount equal to 0.1 and 10 parts per hundred parts fluoropolymer, preferably between 2 to 5 parts per hundred parts fluoropolymer. Examples of useful coagents include triallyl cyanurate; triallyl isocyanurate; triallyl trimellitate; tri(methylallyl) isocyanurate; tris(diallylamine)-s-triazine; triallyl phosphite; N,N-diallyl acrylamide; hexaallyl phosphoramide; N,N,N',N'-tetraalkyl tetraphthalamide; N,N,N',N'- tetraallyl malonamide; trivinyl isocyanurate; 2,4,6-trivinyl methyltrisiloxane; N,N'-m-phenylenebismaleimide; diallyl-phthalate and tri(5-norbomene-2-methylene)cyanurate. Particularly useful is triallyl isocyanurate. Other useful coagents include the bis-olefins disclosed in EPA 0 661 304 A1, EPA 0 784 064 A1 and EPA 0 769 521 A1.

Further, if the cure site component comprises a nitrile, any of the cure composition suitable for curing nitrile components can be used. For example, such nitrile cure composition may comprise one or more ammonia-generating compounds. "Ammonia-generating compounds" include compounds that are solid or liquid at ambient conditions but that generate ammonia under conditions of cure. Such compounds include, for example, hexamethylene tetramine (urotropin), dicyan diamide, and metal-containing compounds of the formula:

$$A^{w+}(NH_3)_vY^{w-}$$

where $A^{w+}$ is a metal cation such as $Cu^{2+}$, $Co^{2+}$, $Co^{3+}$, $Cu^{+}$, and $Ni^{2+}$; w is equal to the valence of the metal cation; $Y^{w-}$ is a counterion, typically a halide, sulfate, nitrate, acetate ; and v is an integer from 1 to about 7.

Also useful as ammonia-generating compounds are substituted and unsubstituted triazine derivatives such as those of the formula:

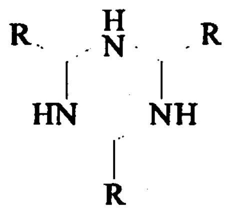

wherein R is a hydrogen or a substituted or unsubstituted alkyl, aryl, or aralkyl group having from 1 to about 20 carbon atoms. Specific useful triazine derivatives include hexahydro-1,3,5-*s*-triazine and acetaldehyde ammonia trimer.

Additionally, the amorphous fluoropolymer is capable of dehydrofluorination. When the fluoropolymer is capable of dehydrofluorination, the cure composition will typically comprise a dehydrofluorinating agent. Examples of materials useful as dehydrofluorinating agents include organo-oniums, such as those discussed in the below. Another class of useful dehydrofluorinating agents are bases, such as 1,8 diaza[5.4.0]bicyclo undec-7-ene, (DBU) and 1,5-diazabicyclo [4.3.0]-5-nonene, (DBN). Preferred dehydrofluorinating agents include tributyl(2-methoxy)-propylphosponium chloride, triphenyl benzyl phosphonium chloride, complexes of tributyl(2-methoxy)-phosphonium chloride with bisphenol AF, and DBU. Combinations of dehydrofluorinating agents may be employed if desired.

An effective amount of dehydrofluorinating agent to cure the fluoropolymer is dependent upon the fluoropolymer employed and the reactivity of the other additives used. Within these parameters, an effective amount of dehydrofluorinating agent is generally from 0.01 to 20 parts per one hundred parts of the fluoropolymer. Preferred addition levels are from 0.1 to 5 parts per hundred.

Generally, a cure composition including a dehydrofluorinating agent will also comprise a polyhydroxy compound. In addition to the polyhydroxy compound, the cure composition generally also comprises one or more organo-onium accelerators. The organo-onium compounds useful in the present invention typically contain at least one heteroatom, i.e., a non-carbon atom such as N, P, S, O, bonded to organic or inorganic moieties and include for example ammonium salts, phosphonium salts and iminium salts. One class of quaternary organo-onium compounds useful in the present invention broadly comprises relatively positive and relatively negative ions wherein a phosphorus, arsenic, antimony or nitrogen generally comprises the central atom of the positive ion, and the negative ion may be an organic or inorganic anion (e.g., halide, sulfate, acetate, phosphate, phosphonate, hydroxide, alkoxide, phenoxide, and bisphenoxide).

Many of the organo-onium compounds useful in this invention are described and known in the art. See, for example, U.S. Pat. Nos. 4,233,421 (Worm), 4,912,171 (Grootaert et al.), 5,086,123 (Guenthner et al.), and 5,262,490 (Kolb et al.), US 5,929,169. Representative examples include the following individually listed compounds and mixtures thereof:

triphenylbenzyl phosphonium chloride
tributylallyl phosphonium chloride
tributylbenzyl ammonium chloride
tetrabutyl ammonium bromide
triaryl sulfonium chloride
8-benzyl-1,8-diazabicyclo [5,4,0]-7-undecenium chloride
benzyl tris(dimethylamino) phosphonium chloride
benzyl(diethylamino)diphenylphosphonium chloride

Another class of useful organo-onium compounds include those having one or more pendent fluorinated alkyl groups. Generally, the most useful fluorinated onium compounds are disclosed by Coggio et al. in U.S. Pat. No. 5,591,804.

The polyhydroxy compound may be used in its free or non-salt form or as the anionic portion of a chosen organo-onium accelerator. The crosslinking agent may be any of those polyhydroxy compounds known in the art to function as a crosslinking agent or co-curative for fluoroelastomers, such as those polyhydroxy compounds disclosed in U.S. Pat. Nos. 3,876,654 (Pattison), and 4,233,421 (Worm). Representative aromatic polyhydroxy compounds include any one of the following: di-, tri-, and tetrahydroxybenzenes, naphthalenes, and anthracenes, and bisphenols of the following formula:

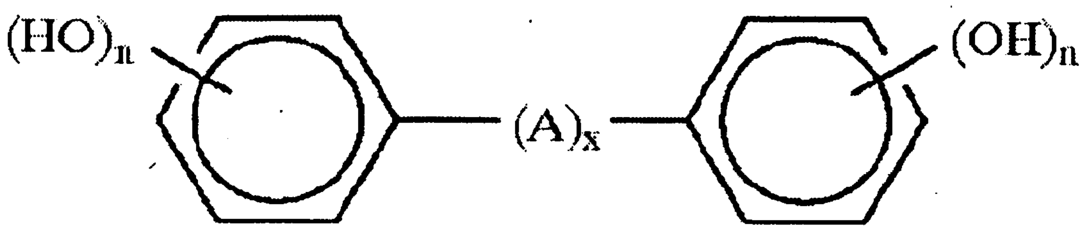

wherein A is a difunctional aliphatic, cycloaliphatic, or aromatic radical of 1 to 13 carbon atoms, or a thio, oxy, carbonyl, sulfonyl, or sulfonyl radical, A is optionally substituted with at least one chlorine or fluorine atom, x is 0 or 1, n is 1 or 2, and any aromatic ring of the polyhydroxy compound is optionally substituted with at least one atom of chlorine, fluorine, bromine, or with a carboxyl or an acyl radical (e.g., --COR where R is H or a C1 to C8 alkyl, aryl, or cycloalkyl group) or alkyl radical with, for example, 1 to 8 carbon atoms. It will be understood from the above bisphenol formula that the --OH groups can be attached in any position (other than number one) in either ring. Blends of two or more of these compounds are also used.

One of the most useful and commonly employed aromatic polyphenols of the above formula is 4,4'-hexafluoroisopropylidenyl bisphenol, known more commonly as bisphenol AF. The compounds 4,4'-dihydroxydiphenyl sulfone (also known as Bisphenol S) and 4,4'-isopropylidenyl bisphenol (also known as bisphenol A) are also widely used in practice.

The cure composition based on a dehydrofluorinating agent may further include an acid acceptor. Acid acceptors can be inorganic or blends of inorganic and organic. Examples of inorganic acceptors include magnesium oxide, lead oxide, calcium oxide, calcium hydroxide, dibasic lead phosphite, zinc oxide, barium carbonate, strontium hydroxide, and calcium carbonate. Organic acceptors include epoxies, sodium stearate, and magnesium oxalate. The preferred acid acceptors are magnesium oxide and calcium hydroxide. The acid acceptors can be used singly or in combination, and preferably are used in amounts ranging from about 2 to 25 parts per 100 parts by weight of the fluoropolymer.

When the fluoropolymer is capable of dehydrofluorination and further includes one or more cure site components, it will be clear that the cure composition may include both a combination of cure components to cause dehydrofluorination and curing of the cure site components.

The curable fluoroelastomer composition may contain further additives, such as carbon black, stabilizers, plasticizers, lubricants, fillers, and processing aids can be incorporated into the compositions, provided they have adequate stability for the intended service conditions. The compositions may be prepared by mixing the fluoropolymer, a cure composition and other additives in conventional rubber processing equipment. Such equipment includes rubber mills, internal mixers, such as Banbury mixers, and mixing extruders.

The curable fluoroelastomer compositions can be used to provide a fluoroelastomer upon curing. In one particular embodiment, the curable fluoroelastomer composition is extruded and cured to obtain a fluoroelastomer article, for example a tube. In another embodiment, the curable fluoroelastomer composition may be used in injection molding and cured to provide an injection molded article such as a gasket or O-ring.

The invention will now be further illustrated by the following examples without however the intention to limit the invention thereto.

EXAMPLES

**Measurement methods**

Solution viscosities of diluted polymer solutions were typically determined on a 0.16% polymer solution in methylethylketone (MEK) at 35°C in accordance to DIN 53726. A *Connon-Fenske-Routine-Viskosimeter* (Fa. Schott, Mainz/Germany) fulfilling ISO/DIS 3105 and ASTM D 2515 was used for the measurements, the *Hagenbach* correcture was applied. The so-obtained reduced viscosities $\eta_{red.}$ were converted into the intrinsic viscosity [η] using the *Huggins* equation ($\eta_{red.} = [\eta] + k_H \times [\eta]^2 \times c$) and a *Huggins* constant of $k_H = 0.34$. The intrinsic viscosity [η] and the reduced viscosity $\eta_{red.}$ are reported in physical units of ml/g.

A strain controlled ARES rheometer of *Rheometry Scientific* was used to evaluate the zero shear viscosity $\eta_0$ at 265°C. The dynamic mechanical data of the fluoropolymer were recorded in frequency sweep experiments using a 25 mm parallel plate geometry in nitrogen atmosphere. The strains were typically ranging from 1 to 20%. Zero shear viscosities $\eta_0$ were extrapolated using the 4 parameter *Carreau* fit function of the orchestrator software, the correlation coefficient was usually $r^2 \geq 0.998$.

A melt flow index (MFI) instrument was used as constant stress rheometer to assess the extrusion properties of the polymers cited here. The melt flow indices (MFI), given in units of g/10', were obtained according to DIN 53735, ISO 12086 or ASTM D-1238 at a temperature of 265°C and with a standardized extrusion die of 2.1 mm diameter and a length of 8.0 mm. A variety of standardized support weights were applied (1.2, 2.16, 3.8, 5.0, 10.0 & 21.6 kg). The support weight $m_{MFI}$ can be converted into the apparent shear stress using the following empirical relation: $\log[\tau_{app.}/Pa] = 1.03 \times \log[m_{MFI}/kg] + 3.88$. Using a polymer density at 265°C of 1,50 g/cm$^3$, the apparent shear rate $\dot{\gamma}_{app.}$, given in physical units of 1/s, were calculated from the MFI by: $\dot{\gamma}_{app.} = 1.23 \times$ MFI. The extruded MFI strands were visually inspected in terms of melt fracture. The critical shear rates $\dot{\gamma}$crit (the shear rate that marks the onset of melt fracture) cited here refer to an interpolated critical wall stress of $\tau_{crti.}$ = 1.31 e5 Pa.

The latex particle size determination was conducted by means of dynamic light scattering with *a Malvern Zetazizer 1000 HSA* in accordance to ISO/DIS 13321. Prior to the measurements, the polymer latexes as obtained from the polymerisations were diluted with 0.001 mol/L KCl-solution, the measurement temperature was 20°C in all cases.

The molar compositions of TFE/HFP/VDF terpolymers cited here were determined by means of transmission infrared spectroscopy according to the following procedure: 150 ± 10 mg purified raw gum were dissolved into 2 ± 0.2 ml acetone. This polymer solution was homogeneously placed onto a KBr press sintered plate (from *Spectra-Tech.*) using a *Chemat Technology KW-4A* spin coater (10s at 750 rpm and 20 s at 1250 rpm). The so-obtained polymer films were dried unter a *Mettler-Toledo LP 16* halogen lamp for 5 min at 60°C. The polymer infrared spectra in a spectral range of 4000 to 400 1/cm were recorded in 164 scans of *a Nicolet DX 510* FT-IR spectrometer operating in extinction mode under nitrogen atmosphere. The thickness of the polymer film is adjusted to give an extinction in between 0.5 and 0.7 at 1194 1/cm. The compositional analysis of the raw data spectra was conducted by means of partial least square (PLS) method of the *Grams/32, Vers. 5.1*$\alpha$ software. This PLS method was calibrated using 41 individual TFE/HFP/VDF terpolymer standard samples of different compositions ranging from 68.3 to 72.6% fluorine content (quantified by $^1$H/$^{19}$F cross integration NMR technique).

Cure Rheology Test were run on uncured, compounded admixtures using an Alpha Technology Moving Die Rheometer (MDR) Model 2000 in accordance with ASTM D 5289-95 at 177°C, no preheat, 12 minutes elapsed time (unless otherwise specified) and a 0.5 arc. Minimum torque ($M_L$), Maximum torque ($M_H$), i.e., highest torque attained during specified period of time when no plateau or maximum was obtained and difference in Torque ($M_H$-$M_L$) were reported. Also reported were: $t_s2$ (time for torque to increase 2 units above $M_L$), t'50 (time for torque to reach $M_L$ + 0,5 [$M_H$-$M_L$], and t'90 (time for torque to reach $M_L$ + 0,9[$M_H$-$M_L$]).

Press-cured samples (150 x 150 x 2.0 mm sheets, unless otherwise noted) were prepared for physical property determination by pressing at about 22 MPa for at 177°C for 10 minutes. Post cure samples were prepared by placing a press-cured sample in a circulating air oven. The oven was maintained at 232°C and the samples treated for 16 hours.

Tensile Strength at Break, Elongation at Break, and Modulus at 100% Elongation were determined using DIN 53504 on samples cut from 2.0 mm sheet with DIN S2 die. Units are reported in Mega Pascals (MPa). Hardness was determined using ASTM D 2240-02 method A with a Type A-2 Shore Durometer.

**Example 1** (comparative)

A polymerization kettle with a total volume of 48.5 l equipped with an impeller agitator system was charged with 29.0 l deionized water. The oxygen free kettle was then heated up to 70° C and the agitation system was set to 240 rpm. The kettle was charged with 4 g of dimethylether, 1217 g hexafluoropropylene (HFP) to a pressure of 10.2 bar absolute, with 180 g vinylidenefluoride (VDF) to 13.5 bar absolute and with 168 g tetrafluorethylene (TFE) to 15.5 bar absolute reaction pressure. The polymerization was initiated by the addition of 40 g ammonium peroxodisulfate (APS, dissolved into 120 ml water). As the reaction starts, the reaction temperature of 70°C was maintained and the reaction pressure of 15.5 bar absolute was maintained by the feeding TFE, VDF and HFP, into the gas phase with a feeding ratio HFP (kg)/VDF (kg) of 1.029 and a feeding ratio TFE (kg)/VDF (kg) of 0.726. When a total feed of 2700 g VDF was reached in 105 min, the feed of the monomers was interrupted by closing the monomer valves. Within 10 minutes, the monomer gas phase was reacted down to a kettle pressure of 9.5 bar. Then the reactor was vented and flushed with $N_2$ in three cycles.

The so-obtained 36.5 kg polymer dispersion having a solid content of 20.7 % and a latex particles having 485 nm in diameter according to dynamic light scattering was removed at the bottom of the reactor.

5.0 l of this polymer dispersion was freeze coagulated over night in a refrigerator. After thawing the material, the so-obtained sponge-like raw polymer was washed five times with demineralised water, the polymer was squeezed out and dried for 12 h in an oven at 130°C. The thus obtained polymer has a composition of 22.8 mol% TFE, 22.9 mol% HFP and 54.3 mol % VDF and is readily soluble in methylethyl ketone (MEK) and tetrahydrofuran (THF), it showed the physical characteristics listed below:

- MFI(265/5): 12.2 g/10 min

- zero shear viscosity $\eta_0$ at 265°C: 3.8e3 Pa·s
- reduced viscosity (MEK@35°C): 76 ml/g
- intrinsic viscosity (MEK@35°C): 73 ml/g
- LCBI: 0.01
- critical shear rate: 93 $s^{-1}$

From these and similarly prepared samples but with different amount of dimethylether, a correlation was established between the critical shear rate ($\gamma^{\bullet}_{crit.}$) and zero shear rate viscosity $\eta_0$ for the $TFE_{23}/HFP_{23}/VDF_{54}$ terpolymers. This correlation is as follows:

$$\log[\gamma_c^{\bullet}/s^{-1}] = 5.55 - \log[\eta_0/Pa \cdot s] \qquad \text{equation 1}$$

Based on the fact that the investigated terpolymers have an essentially linear chain topology (note that the LCBI is very close to zero), the zero shear viscosity $\eta_0$ can be related to the intrinsic viscosity as follows:

$$\eta_0 = 5.5e\text{-}8 \times [\eta]^{5.8} \qquad \text{equation 2}$$

**Synthesis of LCB fluoropolymers**

Long chain branched fluoropolymers ($TFE_{23}/HFP_{23}/VDF_{23}$ terpolymers) were made essentially according to the procedure above. The dimethylether batch charge was varied in each case. Further, small amounts of BDFE were additionally fed into the kettle during the course of polymerization. The dimethylether batch charges as well as the total BDFE amounts utilized are summarized in the following table together with the physical data of the test results.

**Table 1:**

| | | Comp.Example | | LCB-FE1 | | LCB-FE 2 | | LCB-FE3 | | LCB-FE 4 | | LCB-FE 5 | | LCB-FE 6 | |
|---|---|---|---|---|---|---|---|---|---|---|---|---|---|---|---|
| **$Me_2O$ [g]** | | 4.0 | | 3.0 | | 4.5 | | 5.5 | | 3.0 | | 4.0 | | 5. 0 | |
| **BDF E [g]** | | 0 | | 10 | | 10 | | 10 | | 25 | | 25 | | 2 5 | |
| **BDFE feed [%]** | | 0 | | 0.13 | | 0.13 | | 0.13 | | 0. 34 | | 0.34 | | 0.34 | |
| **IR-composition TFE/HFP/VDF** | | 22.8/22. .9/54.3 | | 23.8/22.3/53.9 | | 22.6/22 .0/55.4 | | 24.1/2 1.8/54.1 | | 22.4/22. 1/55.5 | | 24.6/21.3/54.1 | | 22.0/22.3/55.7 | |
| $\eta_{red\cdot}$ [ml/g] | | 76 | | 77 | | 71 | | 60 | | 83 | | 67,5 | | 64.5 | |
| **[η] [ml/g]** | | 73 | | 74 | | 68,5 | | 58 | | 79, ,5 | | 65 | | 62 | |
| $\eta_0$(265°C)[Pa·s] | | 3.8e3 | | 1.8e5 | | 4.0e4 | | 6.3 e3 | | 2.5e6 | | 4.5e5 | | 4.0e4 | |
| **LCBI [1]** | | 0.01 | | 0.94 | | 0.62 | | 0.39 | | 1.8 5 | | 1.59 | | 0.79 | |
| $\dot{\gamma}_{crit.}$ / Pa | | 93 | | 26 | | 57 | | 15 5 | | 14 | | 29 | | 5 6 | |
| **MFI load** | $\tau_{(l)}$/ Pa | **MFI [g/ 10']** | $\dot{\gamma}_{app\cdot}$ [1/s] | **MFI [g/ 10']** | $\dot{\gamma}_{app.}$ [1/s] | **MFI [g/10']** | $\dot{\gamma}_{app\cdot}$ [1/s] | **MFI [g/ 10']** | $\dot{\gamma}_{app\cdot}$ [1/s] | **MFI [g/ 10']** | $\dot{\gamma}_{app.}$ [1/s] | **MFI [g/ 10']** | $\dot{\gamma}_{app.}$ [1/s] | **MFI [g/ 10']** | $\dot{\gamma}_{app\cdot}$ [1/s] |
| 1.2 kg | 9.15e3 | 2.05 | 2.5 | 0.25 | 0.31 | 0.67 | 0.82 | 2.24 | 2.8 | 0.08 | 0.10 | 0.24 | 0.30 | 0.52 | 0.64 |
| 2.16 kg | 1.68e4 | 4.3 | 5.3 | 0.58 | 0.71 | 1.68 | 2.1 | 5.58 | 6.9 | 0.29 | 0.36 | 0.69 | 0.85 | 1.38 | 1.70 |
| 3.8 kg | 3.00e4 | 8.0 | 9.8 | 1.55 | 1.91 | 4.1 | 5.0 | 11.7 | 14.4 | 0.66 | 0.81 | 1.70 | 2.1 | 3.8 | 4.7 |
| 5.0 kg | 3.98e4 | 12.2 | 15.0 | 2.70 | 3.3 | 10.1 | 12.4 | 21.5 | 26.4 | 1.4 | 1.72 | 3.53 | 4.3 | 7.1 | 8.7 |
| 10.0 kg | 8.13e4 | 33 | 40.6 | 8.65 | 10.6 | 20.2 | 24.8 | 54 | 66.4 | 5.8 | 7.1 | 8.9 | 11.0 | 19.2 | 23.6 |
| 21.6 kg | 1.80e5 | 150*) | 185*) | 45*) | 55*) | 87*) | 107*) | 240*) | 295*) | 37*) | 45.5*) | 52*) | 64*) | 85*) | 105 |
| *) melt fracture observed at the extruded MFI strand | | | | | | | | | | | | | | | |

On the basis of equation 1, one can calculate the critical shear rate $\dot{\gamma}_{crit}$ (lin.) for the corresponding linear fluoropolymer of the same molecular weight. With the observed values $\dot{\gamma}_{crit}$(br.) recorded for the branched fluoropolymer, the ratio $\dot{\gamma}_{crit.}$(br.) / $\dot{\gamma}_{crit.}$(lin.) can be calculated quantifying the factor of improvement of the processing properties. These values are summarized in Table 2.

**Table 2:**

| Example | $\dot{\gamma}_{crit.}$(br.) / $\dot{\gamma}_{crit.}$(lin.) | LCBI |
|---|---|---|
| LCB-FE 1 | 13.2 | 0.94 |
| LCB-FE 2 | 6.4 | 0.62 |
| LCB-FE 3 | 2.8 | 0.39 |
| LCB-FE 4 | 102.6 | 1.85 |
| LCB-FE 5 | 36.8 | 1.59 |
| LCB-FE 6 | 6.3 | 0.79 |

It is observed that the fluoropolymers having a LCBI of 1 show a tenfold higher critical shear rate compared to a prior art polymer with the same zero shear viscosity. The critical shear rate is even increased by factor of 100 for a branched polymer with LCBI of 2. For the polymers summarized in Table 2, this observation can be quantified with the following empirical equation:

$$\log[\dot{\gamma}_{crit.}(br.)/\dot{\gamma}_{crit.}(lin.)] \approx LCBI \qquad \text{equation 3}$$

$r^2 = 0.99$

This improved processing behavior is beneficial in particular for tube extrusion and injection molding applications.

**Example 2** (comparative)

As described in the following, the comparative polymer of Example 1 and LCB-FE 3 polymer were press-cured using a Bisphenol cure package and various physical properties were measured. In each case, 100 parts of the polymer were mixed on a two roll mill with the following ingredients:

- 1.285 mmol of triphenyl benzyl phosphonium chloride
- 4.85 mmol Bisphenol-AF
- 3 g magnesium oxide (Elastomag 170 from *Morton International*)
- 6 g calcium hydroxide
- 30 g carbon black (MT-990).

These two cure compounds were tested and compared to each other for curing rheology and meachanical properties. The test results are reported in Table 3.

**Table 3**

| | Example 1 | LCB-FE 3 |
|---|---|---|
| **Curing properties (MDR, 0.5° 12'@177°C)** | | |
| Minimum torque, ML [in/lbs] | 1.2 | 1.5 |
| Maximum torque, MH [in/lbs] | 13.8 | 11.3 |
| MH- ML [in/lbs] | 12.7 | 9.8 |
| Ts2 [minutes] | 1.64 | 1.95 |
| t'50 [minutes] | 2.48 | 2.63 |

(continued)

| | Example 1 | LCB-FE 3 |
|---|---|---|
| **Curing properties (MDR, 0.5° 12'@177°C)** | | |
| t'90 [minutes] | 5.14 | 5.04 |
| **Physical properties of press cured sheet** | | |
| Hardness (Durometer, shore A) | 73 | 73 |
| Tensile strength [MPa] | 14.4 | 11.2 |
| Elogation [%] | 319 | 391 |
| 100% Modulus [MPa] | 3.2 | 2.8 |

**Example 3** (according to the present invention)

A long chain branched $TFE_{23}/HFP_{23}/VDF_{23}$ terpolymer was prepared essentially according to the procedure of LCB-FE 3. The dimethylether batch charge was 5.0 g, the amount of BDFE utilized was 10 g. Further, 66 g (0.4 mol% of monomer feed) of 4-bromo-3,3,4,4,-tetrafluorobutene-1 (BTFB) cure site monomer was continously fed during the course of polymerization together with 10 g of BDFE. The polymerization took 275 min. The so-obtained dispersion having a solid content of 20.2 % showed latex particles with 448 nm in average diameter according to dynamic light scattering. The physical data are listed below:

- MFI(265/1.2): 11.2 g/10 min
- MFI(265/2.16): 26.0 g/10 min
- MFI(265/3.8): 54 g/10 min
- MFI(265/5): 106 g/10 min
- MFI(265/10): 230 g/10 min
- MFI(265/21.6): 841 g/10 min (melt fracture observed)
- zero shear viscosity $\eta_0$ at 265°C: 6.8e2 Pa·s
- reduced viscosity (MEK@35°C): 40 ml/g
- intrinsic viscosity (MEK@35°C): 39 ml/g
- LCBI: 0.41
- critical shear rate: 640 $s^{-1}$

The critical shear rate of this polymer example is improved by 25% compared to an equivalent linear polymer.

## Claims

1. An amorphous fluoropolymer that has one or more cure site components, said cure site components being contained in said amorphous fluoropolymer in an amount between 0.1 and 0.5 mol% based on the total amount of repeating units In the amorphous fluoropolymer and said amorphous fluoropolymer is capable of being dehydrofluorinated, wherein said amorphous fluoropolymer is derivable from a polymerization of (a) one or more gaseous fluorinated monomers and (b) not more than 0.5% by weight based on the total weight of monomers of one or more olefins having a bromine or iodine atom bonded to a carbon of the double bond of the olefin and wherein the cure site components comprise a nitrile group or derive from a cure site monomer according to the formula :

$$CX_2=CX-R_fZ$$

wherein each X independently represents H, F or Cl, $R_f$ represents a perfluorinated aliphatic group that may contain one or more oxygen atoms and Z represents Br or I.

2. An amorphous fluoropolymer according to claim 1 wherein at least part of said cure sites are comprised in end groups of said amorphous fluoropolymer.

3. An amorphous fluoropolymer according to claim 1 or 2 wherein said cure sites comprise a halogen capable of participating in a peroxide cure reaction.

**4.** An amorphous fluoropolymer according to claim 1 wherein said cure site derive from a monomer having the formula:

$$CF_2=CF-R^8_f-CN$$

wherein $R^a_f$ represents a perfluorinated aliphatic group that may contain one or more oxygen atoms.

**5.** An amorphous fluoropolymer according to any of the previous claims wherein at least one of said gaseous fluorinated monomers is vinylidene fluoride.

**6.** An amorphous fluoropolymer according to any of the previous claims wherein said amorphous fluoropolymer is a copolymer of tetrafluoroethylene, hexafluoropropylene and vinylidene fluoride

**7.** A curable composition for making a fluoroelastomer, said composition comprising an amorphous fluoropolymer as defined in any of the previous claims and a cure composition comprising one or more components for curing said amorphous fluoropolymer.

**8.** A curable composition according to claim 7 wherein said amorphous fluoropolymer comprises said cure sites and wherein said cure composition comprises an organic peroxide.

**9.** A curable composition according to claim 7 wherein said amorphous fluoropolymer is capable of dehydrofluorination and wherein said cure composition comprises a dehydrofluorinating agent and a polyhydroxy compound.

**10.** Method of making an elastomer article comprising injection molding or extruding a curable composition as defined in claim 8 or 9 and curing said curable composition.

**11.** Method of producing an amorphous fluoropolymer as defined in claim 1, the method comprising polymerization of (a) one or more gaseous fluorinated monomers and (b) not more than 0.5% by weight based on the total weight of monomers of one or more olefins having a bromine or iodine atom bonded to a carbon of the double bond of the olefin and providing capability for the fluoropolymer to be cured by (i) polymerizing the one ormore gaseous fluorinated monomers in the presence of one or more components comprising a cure site, the total amount of said components being sufficient for introducing between 0.1 and 0.5 mole% of cure site components in the amorphous fluoropolymer and (ii) selecting at least one partially fluorinated gaseous monomer as said one or more gaseous fluorinated monomers or copolymerizing said gaseous fluorinated monomers with one or more non-fluorinated comonomers or partially fluorinated non-gaseous monomers so as to provide an amorphous fluoropolymer capable of being dehydrofluorinated.

## Patentansprüche

**1.** Amorphes Fluorpolymer, das eine oder mehrere Härtungsstellen-Komponenten aufweist, wobei die Härtungsstellen-Komponenten in dem amorphen Fluorpolymer in einer Menge zwischen 0,1 und 0,5 Mol-% vorliegen, basierend auf der Gesamtmenge der sich wiederholenden Einheiten in dem amorphen Fluorpolymer, und das amorphe Fluorpolymer geeignet ist, dehydrofluoriert zu werden, wobei das amorphe Fluorpolymer durch eine Polymerisation von (a) einem oder mehreren gasförmigen, fluorierten Monomeren und (b) von einem oder mehreren Olefinen, die ein Brom- oder Iod-Atom aufweisen, das an einen Kohlenstoff von der Doppelbindung des Olefins gebunden ist, mit nicht mehr als 0,5 Gewichtsprozent, auf der Grundlage von dem Gesamtgewicht der Monomere, erhältlich ist und wobei die Härtungsstellen-Komponenten eine Nitrilgruppe umfassen oder sich von einem Härtungsstellen-Monomer nach der Formel $CX_2=CX-R_f-Z$ ableiten, wobei jedes X unabhängig für H, F oder Cl steht; $R_f$ für eine perfluorierte aliphatische Gruppe steht, die ein oder mehrere Sauerstoffatome enthalten kann, und Z für Br oder I steht.

**2.** Amorphes Fluorpolymer nach Anspruch 1, wobei mindestens ein Anteil von den Härtungsstellen sich in den Endgruppen von dem amorphen Fluorpolymer befinden.

**3.** Amorphes Fluorpolymer nach Anspruch 1 oder 2, wobei die Härtungsstellen ein Halogen umfassen, das zur Teilnahme an einer Aushärtungsreaktion durch Peroxide geeignet ist.

**4.** Amorphes Fluorpolymer nach Anspruch 1, wobei die Härtungsstellen sich von einem Härtungsstellen-Monomer ableiten, welches die Formel:

$CF_2=CF-R^a_f-C_N$

aufweist, wobei $R^a_f$ für eine perfluorierte aliphatische Gruppe steht, die ein oder mehrere Sauerstoffatome enthalten kann.

**5.** Amorphes Fluorpolymer nach einem der vorhergehenden Ansprüche, wobei mindestens eines der gasförmigen, fluorierten Monomere Vinylidenfluorid ist.

**6.** Amorphes Fluorpolymer nach einem der vorhergehenden Ansprüche, wobei das amorphe Fluorpolymer ein Copolymer aus Tetrafluorethylen, Hexafluorpropylen und Vinylidenfluorid ist.

**7.** Aushärtbare Zusammensetzung zur Herstellung von einem Fluorelastomer, wobei die Zusammensetzung ein amorphes Fluorpolymer umfasst, wie es in einem der vorhergehenden Ansprüche definiert ist, und eine Härtungszusammensetzung, die eine oder mehrere Komponenten zur Aushärtung von dem amorphen Fluorpolymer umfasst.

**8.** Aushärtbare Zusammensetzung nach Anspruch 7, wobei das amorphe Fluorpolymer die Härtungsstellen umfasst und wobei die Härtungszusammensetzung ein organisches Peroxid umfasst.

**9.** Aushärtbare Zusammensetzung nach Anspruch 7, wobei das amorphe Fluorpolymer zur Dehydrofluorierung geeignet ist und wobei die Härtungszusammensetzung ein Mittel zur Dehydrofluorierung und eine Polyhydroxy-Verbindung umfasst.

**10.** Verfahren zur Herstellung von einem Elastomergegenstand, umfassend das Spritzgießen oder das Extrudieren einer aushärtbaren Zusammensetzung, wie sie in Anspruch 8 oder 9 festgelegt ist, und das Aushärten der aushärtbaren Zusammensetzung.

**11.** Verfahren zur Herstellung von einem amorphen Fluorpolymer, wie es in Anspruch 1 festgelegt ist, wobei das Verfahren die Polymerisation von (a) einem oder mehreren gasförmigen, fluorierten Monomeren und (b) von einem oder mehreren Olefinen umfasst, die ein Brom- oder Iod-Atom aufweisen, das an einen Kohlenstoff von der Doppelbindung des Olefins gebunden ist, mit nicht mehr als 0,5 Gewichtsprozent, auf der Grundlage von dem Gesamtgewicht der Monomere, und die Fähigkeit für das Fluorpolymer bereitstellt, ausgehärtet zu werden durch (i) Polymerisieren der einen oder mehreren gasförmigen, fluorierten Monomere in der Gegenwart einer oder mehrerer Komponenten, die eine Härtungsstelle umfassen, wobei die Gesamtmenge der Komponenten ausreichend ist für die Einführung von zwischen 0,1 und 0,5 Mol-% der Härtungsstellen-Komponenten in das amorphe Fluorpolymer und (ii) Auswählen von mindestens einem teilweise fluorierten, gasförmigen Monomer als das/die eine oder mehreren gasförmigen, fluorierten Monomer(e) oder Copolymerisieren der gasförmigen, fluorierten Monomere mit einem oder mehreren nicht-fluorierten Comonomeren oder teilweise fluorierten, nicht-gasförmigen Monomeren, um so ein amorphes Fluorpolymer bereitzustellen, das geeignet ist, dehydrofluoriert zu werden.

## Revendications

**1.** Fluoropolymère amorphe qui présente un ou plusieurs composants à sites de durcissement, lesdits composants à sites de durcissement étant présents dans ledit fluoropolymère amorphe en une quantité comprise entre 0,1 et 0,5 % en moles, par rapport à la quantité totale de motifs récurrents dans le fluoropolymère amorphe, et ledit fluoropolymère amorphe est capable d'être déshydrofluoré, où ledit fluoropolymère amorphe est dérivable à partir d'une polymérisation de (a) un ou plusieurs monomères fluorés gazeux et (b) au plus 0,5 % en poids, par rapport au poids total de monomères, d'une ou de plusieurs oléfines renfermant un atome de brome ou d'iode lié à un atome de carbone de la double liaison de l'oléfine, et où les composants à sites de durcissement renferment un groupe nitrile ou sont dérivés d'un monomère à sites de durcissement selon la formule :

$CX_2 = CX-R_f-Z$

dans laquelle chaque X représente, indépendamment, un atome d'hydrogène, un atome de fluor ou un atome de chlore, et $R_f$ représente un groupe aliphatique perfluoré qui peut renfermer un ou plusieurs atomes d'oxygène, et Z représente un atome de brome ou un atome d'iode.

2. Fluoropolymère amorphe selon la revendication 1, dans lequel au moins une partie desdits sites de durcissement est comprise dans des groupes terminaux dudit fluoropolymère amorphe.

3. Fluoropolymère amorphe selon la revendication 1 ou 2, dans lequel lesdits sites de durcissement comprennent un halogène capable de participer à une réaction de durcissement par peroxyde.

4. Fluoropolymère amorphe selon la revendication 1, dans lequel lesdits sites de durcissement sont dérivés d'un monomère de formule :

$$CF_2 = CF\text{-}R^a_f\text{-}CN$$

dans laquelle $R^a_f$ représente un groupe aliphatique perfluoré qui peut renfermer un ou plusieurs atomes d'oxygène.

5. Fluoropolymère amorphe selon l'une quelconque des revendications précédentes, dans lequel au moins un desdits monomères fluorés gazeux est le fluorure de vinylidène.

6. Fluoropolymère amorphe selon l'une quelconque des revendications précédentes, où ledit fluoropolymère amorphe est un copolymère de tétrafluoroéthylène, d'hexafluoropropylène et de fluorure de vinylidène.

7. Composition durcissable pour fabriquer un fluoro-élastomère, ladite composition comprenant un fluoropolymère amorphe, tel que défini dans l'une quelconque des revendications précédentes, et une composition de durcissement comprenant un ou plusieurs composants pour le durcissement dudit fluoropolymère amorphe.

8. Composition durcissable selon la revendication 7, dans laquelle ledit fluoropolymère amorphe comprend lesdits sites de durcissement et où ladite composition de durcissement comprend un peroxyde organique.

9. Composition durcissable selon la revendication 7, dans laquelle ledit fluoropolymère amorphe est capable d'une déshydrofluoration et où ladite composition de durcissement comprend un agent de déshydrofluoration et un composé polyhydroxy.

10. Procédé de fabrication d'un article d'élastomère comprenant le moulage par injection ou l'extrusion d'une composition durcissable, telle que définie dans la revendication 8 ou 9, et le durcissement de ladite composition durcissable.

11. Procédé de production d'un fluoropolymère amorphe, tel que défini dans la revendication 1, le procédé comprenant la polymérisation de (a) un ou plusieurs monomères fluorés gazeux et (b) au plus 0,5 % en poids, par rapport au poids total de monomères, d'une ou de plusieurs oléfines renfermant un atome de brome ou d'iode lié à un atome de carbone de la double liaison de l'oléfine, et procurant au fluoropolymère l'aptitude à être durci par (i) la polymérisation de l'un ou plusieurs monomères fluorés gazeux en présence d'un ou de plusieurs composants comprenant un site de durcissement, la quantité totale desdits composants étant suffisante pour introduire entre 0,1 et 0,5 % en moles de composants à sites de durcissement dans le fluoropolymère amorphe, et (ii) le choix d'au moins un monomère gazeux partiellement fluoré en tant que dits un ou plusieurs monomères fluorés gazeux, ou la copolymérisation desdits monomères fluorés gazeux avec un ou plusieurs comonomères non fluorés ou monomères non fluorés, de façon à procurer un fluoropolymère amorphe capable d'être déshydrofluoré.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 398241 A
- EP 171290 A
- US 4214060 A
- EP 211251 A
- US 4501869 A
- US 4000356 A
- EP 0661304A1 A
- EP 0784064A1 A
- EP 0769521A1 A
- US 4233421 A, Worm
- US 4912171 A, Grootaert
- US 5086123 A, Guenthner
- US 5262490 A, Kolb
- US 5929169 A
- US 5591804 A, Coggio
- US 3876654 A, Pattison


### Non-patent literature cited in the description


- Modern Fluoropolymers. Wiley Science, 1997
- **R. N. SHROFF ; H. MAVRIDIS.** *Macromol.,* 1999, vol. 32, 8464-8464
- *MACROMOL.,* 2001, vol. 34, 7362-7367